# DEMANDE DE BREVET EUROPEEN

(11) **EP 4 606 680 A1**
(43) Date de publication de la demande: **27.08.2025**
(21) Numéro de dépôt: 25157828.2
(22) Date de dépôt: 13.02.2025
(51) Int. Cl.: B62D 21/11, B60K 5/12

(54) **AGENCEMENT COMPRENANT DES ÉLÉMENTS DE FILTRATION DES VIBRATIONS ENTRE UNE CAISSE ET UN GROUPE MOTOPROPULSEUR DE VÉHICULE**

(30) Priorité: 26.02.2024 FR 2401851
(71) Demandeur: Renault s.a.s, 92100 Boulogne Billancourt (FR)
(72) Inventeur: FERNANDEZ, Felix, 78280 GUYANCOURT (FR); TOUROVEROFF, Igor, 78280 GUYANCOURT (FR)

(57) **Abrégé**

Agencement comprenant des éléments de filtration des vibrations entre une caisse et un groupe motopropulseur de véhicule.

L'invention porte sur un agencement (6) pour véhicule comprenant une caisse (2) et un groupe motopropulseur (5), l'agencement (6) comprenant un longeron gauche (4L) et un longeron droit (4R), un support latéral gauche (20) fixé au groupe motopropulseur (5) et au longeron gauche (4L) et un support latéral droit (40) fixé au groupe motopropulseur (5) et au longeron droit (4R), une poutre (10) s'étendant transversalement ou sensiblement transversalement, la poutre (10) étant fixée au support latéral gauche (20) et au support latéral droit (40), un support arrière fixé au groupe motopropulseur (5) et à la caisse (2), le support arrière comprenant un premier élément de filtration des vibrations et un deuxième élément de filtration des vibrations, au moins un élément (8) d'un tel véhicule étant agencé sur la poutre (10) pour faire office de masse battante.

## Description

### Domaine technique de l'invention

L'invention concerne un agencement pour un véhicule comprenant une caisse, un groupe motopropulseur et des éléments de filtration agencés entre la caisse et le groupe motopropulseur. L'invention porte encore sur un véhicule comprenant un tel agencement.

### Etat de la technique antérieure

Un véhicule, notamment un véhicule automobile, comprend généralement une caisse et un groupe motopropulseur. Un moyen de filtration est généralement prévu entre la caisse et le groupe motopropulseur de sorte à limiter les vibrations transmises. Le moyen de filtration permet notamment d'améliorer le confort en termes d'acoustique au sein du véhicule.

En cas de groupe motopropulseur comprenant un moteur électrique, les émissions de bruits et/ou de vibrations sont faibles sur les bandes de fréquences usuellement regardées. Toutefois, de telles émissions restent perceptibles par les occupants d'un tel véhicule, notamment du fait de leurs fréquences et du faible niveau de bruit de fond.

Or le faible niveau de nuisances sonores fait partie des atouts d'un véhicule électrique. Ainsi, il convient d'éviter que les émissions de bruits et/ou de vibrations provenant d'un tel moteur électrique nuisent au confort acoustique des occupants d'un tel véhicule électrique.

### Présentation de l'invention

Le but de l'invention est de fournir un agencement remédiant aux inconvénients ci-dessus. En particulier, l'invention propose un agencement permettant de fixer un groupe motopropulseur sur une caisse de manière simple, fiable et particulièrement économique.

### Résumé de l'invention

Pour atteindre cet objectif, l'invention porte sur un agencement pour véhicule, notamment pour véhicule automobile, comprenant une caisse et un groupe motopropulseur, l'agencement comprenant :
- un longeron gauche et un longeron droit, notamment un longeron avant gauche et un longeron avant droit,
- un support latéral gauche fixé au groupe motopropulseur et au longeron gauche, le support latéral gauche comprenant un premier élément de filtration des vibrations et un deuxième élément de filtration des vibrations, et un support latéral droit fixé au groupe motopropulseur et au longeron droit, le support latéral droit comprenant un premier élément de filtration des vibrations et un deuxième élément de filtration des vibrations,
- une poutre s'étendant transversalement ou sensiblement transversalement, la poutre étant fixée au support latéral gauche et au support latéral droit,
- un support arrière fixé au groupe motopropulseur et à la caisse, le support arrière comprenant un premier élément de filtration des vibrations et un deuxième élément de filtration des vibrations,
- au moins un élément d'un tel véhicule étant agencé sur la poutre pour faire office de masse battante.

L'agencement peut comprendre deux moyens de fixation gauche et deux moyens de fixation droit, notamment des vis,
la poutre pouvant être fixée sur le support latéral gauche par les deux moyens de fixation gauche et sur le support latéral droit par les deux moyens de fixation droit,
les moyens de fixation s'étendant éventuellement selon la direction verticale, notamment du haut vers le bas.

Les premier et deuxième éléments de filtration du support latéral gauche peuvent être maintenus l'un par rapport à l'autre par les deux moyens de fixation gauche,
et les premier et deuxième éléments de filtration du support latéral droit peuvent être maintenus l'un par rapport à l'autre par les deux moyens de fixation droit.

Les deux moyens de fixation gauche peuvent être agencés au niveau d'une première extrémité de la poutre,
et les deux moyens de fixation droit peuvent être agencés au niveau d'une deuxième extrémité de la poutre.

Le support arrière peut être une biellette comprenant un premier axe et un deuxième axe, notamment un premier axe et un deuxième axe parallèles l'un par rapport à l'autre, la biellette pouvant comprendre un premier plot de filtration des vibrations au niveau de son premier axe et un deuxième plot de filtration des vibrations au niveau de son deuxième axe, notamment le support arrière peut être agencé en bas du groupe moto propulseur et/ou peut s'étendre sensiblement selon la direction longitudinale.

Le premier axe et/ou le deuxième axe de la biellette peut s'étendre transversalement.

Le ou les éléments agencé(s) sur la poutre pour faire office de masse battante peuvent être un chargeur électrique et/ou une pompe de climatisation et/ou un compresseur de climatisation et/ou une batterie.

La poutre peut être en alliage d'aluminium, notamment obtenue par extrusion et/ou par pliage et/ou par fonderie,
ou la poutre peut être en acier, notamment obtenue par découpe et emboutissage,
ou la poutre peut être en matériau plastique et/ou en matériau composite, éventuellement en comprenant un lest.

La masse de la poutre peut être supérieure ou égale à 1 kg.

Le ou les éléments agencés sur la poutre pour faire office de masse battante peuvent avoir une masse totale supérieure ou égale à 5 kg.

La poutre peut être positionnée, selon la direction verticale, au-dessus du groupe motopropulseur.

L'invention porte encore sur un véhicule, notamment un véhicule automobile, comprenant un agencement tel que défini précédemment.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
La figure 1 est une vue schématique d'un véhicule automobile selon un mode de réalisation de l'invention.
La figure 2 est une vue en coupe selon un plan vertical et transversal d'un agencement selon un mode de réalisation de l'invention.
La figure 3 est une vue partielle en coupe selon un plan vertical et longitudinal de l'agencement selon le mode de réalisation de l'invention.
La figure 4 est une vue en coupe selon un plan vertical et longitudinal de l'agencement selon le mode de réalisation de l'invention.
La figure 5 est une vue en perspective partielle de l'agencement selon le mode de réalisation de l'invention.
La figure 6 est un graphique illustrant les différences de filtration entre des fixations d'un groupe moto propulseur par rapport à une caisse comprenant chacune un seul élément de filtration et des fixations comprenant chacune deux éléments de filtration.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

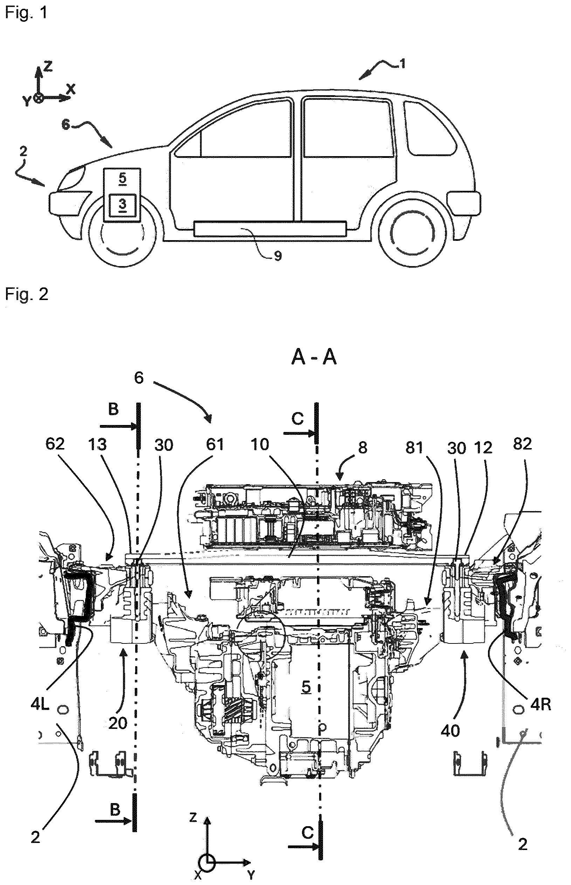

Comme illustré sur la figure 1, un véhicule 1, par exemple un véhicule automobile, comprend une caisse 2. Le véhicule 1 comprend un groupe motopropulseur 5. De préférence, le groupe motopropulseur 5 comprend au moins un moteur électrique 3 pour la propulsion et/ou la traction du véhicule 1. Le groupe motopropulseur peut être agencé à l'avant, et/ou à l'arrière du véhicule, et/ou en position centrale. Le groupe motopropulseur 5 peut éventuellement encore comprendre un moteur thermique pour la propulsion et/ou la traction du véhicule 1 et/ou pour produire de l'énergie électrique. Le véhicule 1 comprend de préférence une batterie 9 pour le stockage d'énergie électrique. Le véhicule 1 comprend encore un agencement 6 comprenant notamment la caisse 2 et le groupe motopropulseur 5.

Comme illustré sur la figure 2, l'agencement 6 ou la caisse 2 comprend un longeron gauche 4L. L'agencement 6 ou la caisse 2 comprend encore un longeron droit 4R. Avantageusement, le longeron gauche 4L est un longeron gauche agencé à l'avant du véhicule et le longeron droit 4R est un longeron droit agencé à l'avant du véhicule.

L'agencement 6 comprend encore une poutre ou traverse 10 s'étendant transversalement, ou sensiblement transversalement. Par exemple, la poutre 10 s'étend entre le longeron gauche 4L et le longeron droit 4R. De préférence, la poutre 10 est positionnée, selon la direction verticale, au-dessus du groupe motopropulseur 5.

Comme illustré sur la figure 2, l'agencement 6 comprend encore un support latéral gauche 20 fixé au groupe motopropulseur 5 et au longeron gauche 4L. L'agencement 6 comprend encore un support latéral droit 40 fixé au groupe motopropulseur 5 et au longeron droit 4R.

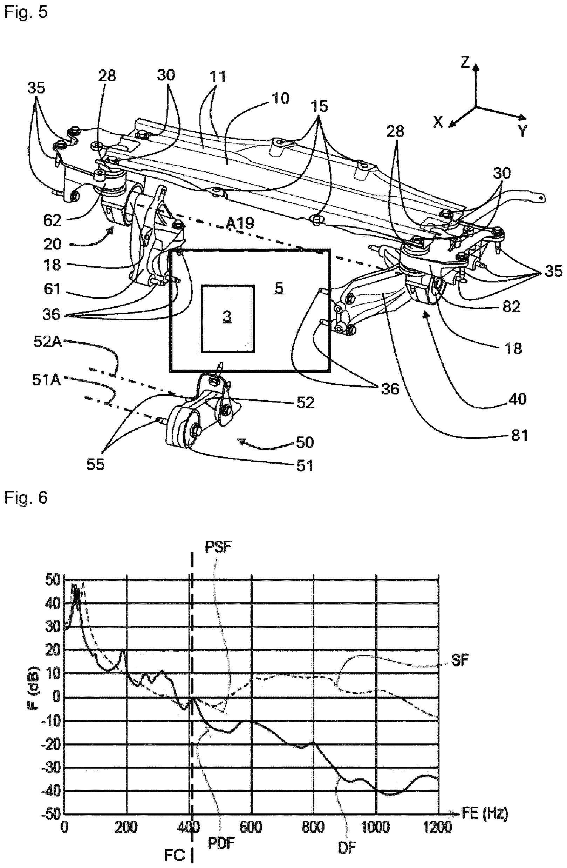

De préférence, comme illustré sur les figures 2 et 5, une première interface, une embase, une pièce intercalaire, un support 61 est agencé entre le groupe motopropulseur 5 et le support latéral gauche 20. Une première interface, une embase, une pièce intercalaire, un support 81 est agencé entre le groupe motopropulseur 5 et le support latéral droit 40. Une deuxième interface, une embase, une pièce intercalaire, un support sur longeron 62 est agencé entre le support latéral gauche 20 et le longeron gauche 4L. Une deuxième interface, une embase, une pièce intercalaire, un support sur longeron 82 est agencé entre le support latéral droit 40 et le longeron droit 4R. De préférence, les pièces intercalaires ou entretoises 61, 62, 81, 82 sont des pièces en acier ou en alliage d'aluminium venues de fonderie et/ou usinées. Les pièces 62, 82 sont fixées par rapport aux longerons par exemple par des moyens de fixations de type vis écrous, de préférence des vis 35 illustrées sur la figure 5. De telles vis 35 viennent coopérer avec des taraudages ménagés dans chaque longeron, ou avantageusement, avec des écrous rapportés sur les longerons (les longerons ne sont pas représentés sur la figure 5). Les pièces 61, 81 sont fixées par rapport au groupe motopropulseur 5 par exemple par des moyens de fixations de type vis écrous, de préférence des vis 36 illustrées sur la figure 5. De telles vis 36 viennent coopérer dans des taraudages ménagés dans le groupe motopropulseur 5, et/ou dans un moteur électrique 3, ou des écrous rapportés (le groupe motopropulseur est illustré schématiquement sur la figure 5).

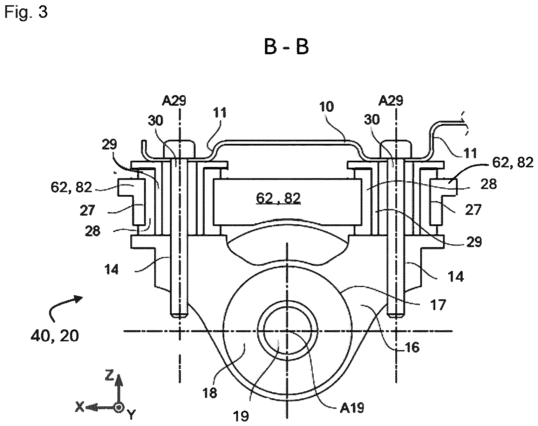

Plus précisément, comme illustré sur la figure 3, chaque support latéral 20, 40 de l'agencement 6 comprend un premier élément de filtration 18 des vibrations. Chaque support latéral 20, 40 comprend encore un deuxième élément de filtration 28 des vibrations. Ces premier et deuxième éléments de filtration peuvent avoir des caractéristiques de filtration différentes.

Chaque support latéral 20, 40 comprend un corps 16. Le corps 16 comprend un alésage 17. Le corps 16 reçoit le premier élément de filtration, de préférence un élément élastique 18 cylindrique, par exemple comprenant du caoutchouc ou un matériau ayant des propriétés similaires, au sein de l'alésage 17. De préférence, l'élément élastique 18 comprend une partie interne tubulaire comprenant un orifice axial destiné à recevoir un axe 19, par exemple une tige filetée de vis, de préférence une partie non filetée d'une tige de vis ou une tige filetée ou un goujon. Le cas échéant, la vis 19 vient se visser dans un taraudage ménagé dans le support correspondant 61, 81. La coopération entre une vis 19, un support latéral 20, 40 et la première interface 61, 81 correspondante assure le positionnement et le maintien en position de chaque support latéral par rapport à la première interface. Chaque support 61, 81 étant fixé d'un côté du groupe moto propulseur, chaque support latéral 20, 40 est donc fixé par rapport au groupe moto propulseur 5, et le cas échéant au moteur électrique 3.

De préférence, comme illustré sur les figures 3 et 5, chaque support latéral 20, 40 se fixe à chaque support sur longeron 62, 82 par l'intermédiaire du deuxième élément de filtration 28. Pour cela, avantageusement, chaque support longeron 62, 82 comprend deux alésages 27. Autrement dit chaque support longeron 62, 82 reçoit le deuxième élément de filtration 28, à savoir deux éléments élastiques, par exemple comprenant chacun du caoutchouc ou un matériau ayant des propriétés similaires, au sein de chaque alésage 27. De préférence, chaque élément élastique 28, avantageusement cylindrique, comprend une partie tubulaire interne 29 destinée à recevoir un axe, par exemple une tige filetée d'un moyen de fixation 30. Les orifices de chaque partie tubulaire interne 29 logent une partie non filetée d'une tige de vis 30 ou une tige filetée ou un goujon.

De préférence, les éléments élastiques 18, 28 sont des pièces cylindriques commercialisées sous la marque « SILENTBLOC ». Une telle pièce comprend une partie tubulaire externe destinée à venir se loger dans un alésage, une partie tubulaire interne, et une partie cylindrique élastique s'étendant entre les parties tubulaires interne et externe. Un arbre ou axe, généralement une vis, notamment une partie non filetée d'une tige de vis, est inséré dans la partie tubulaire interne. De préférence, les parties tubulaires interne et externe sont métalliques, par exemple en acier.

Comme illustré sur la figure 3, deux moyens de fixation 30 permettent de fixer la poutre 10 sur chaque support latéral, de préférence sur le dessus de chaque support latéral. Ainsi, de préférence, on utilise quatre vis 30 pour assurer la fixation de la poutre sur les deux supports latéraux 20, 40.

Plus précisément, les vis 30 viennent se visser dans des taraudages 14 ménagés dans le corps 16. Ainsi, deux vis 30 permettent de fixer, assembler, une extrémité de la poutre 10 sur un support latéral. En effet, les deux éléments élastiques 28 constituant le deuxième élément de filtration sont pris en sandwich entre l'extrémité de la poutre et le corps 16 d'un support latéral 20, 40 par les deux vis 30. Les supports longerons 62, 82 s'étendent alors partiellement entre la traverse 10 et le corps 16 des supports latéraux 20, 40. Etant donnée l'interposition des éléments amortissant 28, les supports longerons 62, 82 ne reçoivent pas les vibrations reçues ou émises par la traverse 10. Par contre la traverse 10 reçoit les vibrations du corps 16 de chaque support latéral, les parties tubulaires internes 29 et les vis 30 étant particulièrement rigides et assemblés ensemble. Avantageusement, les deux axes A29 des parties tubulaires 29 des éléments élastiques 28 sont parallèles, ou sensiblement parallèles, et sont perpendiculaires, ou sensiblement perpendiculaires, à l'axe A19 de la parie tubulaire interne 19 de l'élément élastique 18. Par exemple, les axes A29 s'étendent verticalement, ou sensiblement verticalement, et l'axe A19 s'étend transversalement, ou sensiblement transversalement.

Autrement dit, un premier niveau de filtration est assuré par un premier plot de filtration 18 de chaque côté, entre le groupe motopropulseur 5, plus précisément entre chaque support 61, 81 et le support latéral adjacent 20, 40. Un deuxième niveau de filtration est assuré par deux plots de filtration 28 par côté, à savoir entre le corps 16 de chaque support latéral 20, 40 et le support sur longeron 62, 82 correspondant. Les supports sur longerons 62, 82 étant fixés respectivement sur les longerons 4L, 4R et les supports 61, 81 étant fixés sur le groupe moteur 5, au final, deux niveaux de filtration sont agencés entre le groupe moteur 5 et la caisse 2.

En outre, via ce montage, les premier et deuxième éléments de filtration 18, 28 sont maintenus l'un par rapport à l'autre, de chaque côté, par seulement deux moyens de fixation 30. Les deux moyens de fixation droit 30 sont agencés au niveau d'une extrémité 12 de la poutre 10 et les deux moyens de fixation gauche 30 sont agencés au niveau de l'autre extrémité 13 de la poutre 10 (voir figure 2). Ces quatre vis 30 assurent également, au moins en grande partie voire intégralement, la reprise du poids du groupe motopropulseur 5 entre celui-ci et la caisse.

Ainsi, la poutre 10 s'étend transversalement en étant fixée au support latéral gauche 20 et au support latéral droit 40 par quatre vis 30 en tout. En effet, comme vu précédemment, l'agencement 6 comprend deux moyens de fixation gauche et deux moyens de fixation droit, de préférence de type vis 30. Les vis 30 s'étendent donc de préférence verticalement au sein des orifices 29 ménagés dans les éléments élastiques 28 faisant office de deuxième élément de filtration de fixation. De préférence encore, les vis sont assemblées depuis le haut vers le bas, notamment à des fins ergonomiques.

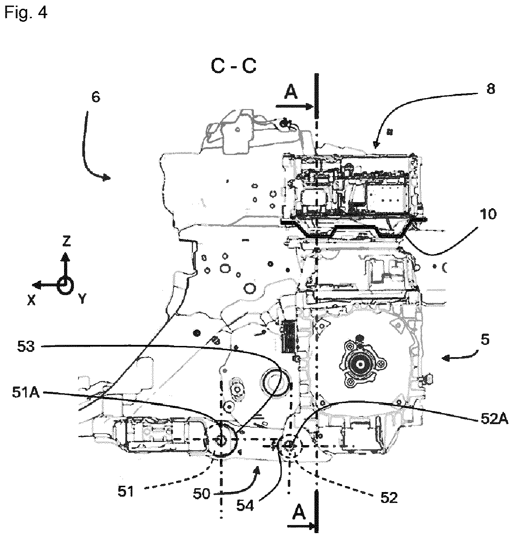

Comme illustré sur les figures 4 et 5, l'agencement 6 comprend encore un support arrière 50 de reprise de couple. Le support arrière 50 est fixé d'une part au groupe motopropulseur 5 et d'autre part à la caisse 2. Le support arrière 50 comprend un premier élément de filtration 51 des vibrations et un deuxième élément de filtration 52 des vibrations. Ces premier et deuxième éléments de filtration peuvent avoir des caractéristiques de filtration différentes. De préférence, le support arrière 50 est une biellette comprenant un premier axe 51A et un deuxième axe 52A. De préférence, le premier axe 51A et le deuxième axe 52A sont parallèles l'un par rapport à l'autre. Plus précisément, la biellette comprend un premier plot de filtration 51 des vibrations au niveau de son premier axe 51A et un deuxième plot de filtration 52 des vibrations au niveau de son deuxième axe 52A. De préférence, les plots 51, 52 sont élastiques. De tels plots sont par exemple des pièces commercialisées sous la marque «SILENTBLOC». Une telle pièce comprend une partie tubulaire externe destinée à venir se loger dans chacun des deux alésages 53, 54 de la biellette 50, une partie tubulaire interne, et une partie cylindrique élastique s'étendant entre les parties tubulaires interne et externe. Un arbre ou axe, généralement une vis ou un boulon 55, notamment une partie non filetée d'une tige de vis, est inséré dans la partie tubulaire interne. De préférence, les parties tubulaires interne et externe sont métalliques, par exemple en acier. Ainsi, pour le premier plot 51, la vis d'un boulon 55 vient se centrer sensiblement sur le premier axe 51A, et pour le deuxième plot 52, la vis d'un boulon 55 vient se centrer sensiblement sur le deuxième axe 52A. De préférence, les parties tubulaires interne et externe sont métalliques, par exemple en acier. Comme illustré notamment sur la figure 4, la biellette 50 est agencée en bas du groupe moto propulseur 5, de préférence en s'étendant sensiblement selon la direction longitudinale. Par exemple, le premier axe 51A et/ou le deuxième axe 52A de la biellette 50 s'étend transversalement. De préférence, une interface de type chape est ménagée sur le groupe motopropulseur 5 pour assurer la fixation du plot 52 avec un boulon 55 et une interface de type chape est ménagée sur la caisse 2 pour assurer la fixation du plot 51 avec un autre boulon 55. La biellette 50 reprend les efforts générés par la rotation du groupe motopropulseur autour d'un axe virtuel transversal ou sensiblement transversal situé entre les éléments filtrants supérieurs 18 et la biellette lorsque le groupe motopropulseur est sollicité, en particulier lors de la mise sous couple (accélérations/décélérations).

L'agencement 6 comprend encore au moins un élément 8 du véhicule. Cet ou ces éléments 8 est ou sont agencé(s), de préférence fixé(s) sur la poutre 10 pour faire office de masse battante. De préférence, des trous 15 sont ménagés dans la traverse 10 pour faciliter la fixation du ou des éléments 8. A titre d'exemple, l'élément 8 est un chargeur électrique, et/ou une pompe de climatisation, et/ou un compresseur de climatisation, et/ou une batterie.

La poutre 10 est par exemple en alliage d'aluminium, par exemple obtenue par extrusion et/ou par pliage et/ou par fonderie. Alternativement, la poutre 10 est en acier, par exemple obtenue par découpe et emboutissage.

Alternativement encore, la poutre 10 est en matériau plastique et/ou en matériau composite. Dans ce cas, étant donné la légèreté de tels matériaux, on ajoute éventuellement un lest au sein de sa structure. Toutefois, on préfère ajouter un élément 8 supplémentaire, par exemple au-dessus, ou en-dessous de la poutre, pour augmenter la masse de la poutre.

Par exemple, la masse de la poutre 10 est supérieure ou égale à 1 kg. Par exemple, le ou les éléments 8 ont une masse totale supérieure ou égale à 5 kg.

La poutre 10 est donc fixée indirectement, via la deuxième filtration 28, aux longerons gauche et droit 4L, 4R. En effet, la poutre 10 est fixée rigidement sur, à, au niveau de, chaque support latéral 20, 40 via les vis 30 vissées dans chaque corps 16 et les parties tubulaires internes 29 des plots 28 prises en sandwich entre la poutre et le corps 16. Cependant chaque support latéral 20, 40 est lui-même fixé à son longeron adjacent par l'intermédiaire de son support sur longeron 62, 82 correspondant via le deuxième élément de filtration, c'est-à-dire isolé par deux plots amortissant 28.

Alternativement, chaque support latéral est fixé d'une part au longeron adjacent, via un élément filtrant, et d'autre part au groupe motopropulseur, via un autre élément filtrant. Dans ce cas, aucune pièce intermédiaire n'est intercalée entre un support latéral et un longeron ou entre un support latéral et le groupe motopropulseur, seul le support latéral comprenant son premier plot de filtration et ses deux deuxièmes plots de filtration s'étend entre le groupe motopropulseur et les longerons.

Selon le mode de réalisation illustré, l'agencement 6 comprend donc un premier moyen ou élément de filtration 18 de vibrations de chaque côté du groupe motopropulseur 5. Le premier élément de filtration 18 est agencé entre la première interface 61, 81 et le deuxième élément de filtration 28. Pour rappel, au niveau de chacune de ses extrémités 12, 13, la poutre 10 est reliée, fixée, via les deux fixations 30, à chaque corps 16 logeant le premier élément de filtration 18. Ainsi, la poutre 10 et les éléments 8 fixés à celle-ci, constituent la masse battante entre les premières interfaces 61, 81 et les deuxièmes interfaces 62, 82 (voir figure 2). En effet, les vis 30 assurent la fixation rigide de la poutre 10 sur chaque partie tubulaire interne des deuxièmes éléments de filtration 28 et avec chaque corps 16 des supports latéraux. Pour rappel, la partie tubulaire interne, comme la partie tubulaire externe, de chaque élément filtrant 28 sont rigides, de préférence en acier. Ainsi, la poutre 10 est fixée sans amortissement, sans filtration des vibrations, vis-à-vis de chaque support latéral 20, 40.

Plus précisément, le premier amortissement ou filtrage ou filtration des vibrations est assuré entre une première interface 61, 81 et le corps 16 d'un support latéral via un premier élément 18. Le deuxième amortissement ou filtrage ou filtration des vibrations est assuré entre le corps 16 de chaque support latéral 20, 40 et le support sur longeron 62, 82 via le deuxième élément 28 qui comprend deux plots par support latéral.

Dans le mode de réalisation illustré, le deuxième moyen de filtration 28 est agencé entre la deuxième interface ou support sur longeron et le premier moyen de filtration 18. Autrement dit, comme illustré sur la figure 3, le premier moyen de filtration 18 et le deuxième moyen de filtration 28 sont juxtaposés, accolés, conjoints, à proximité l'un de l'autre.

Pour rappel, chaque corps 16 est fixé à chaque partie tubulaire interne 29 des deuxièmes éléments filtrant 28, et à la poutre 10 par les mêmes fixations 30. Ainsi, la poutre est solidaire du corps 16. De ce fait, la traverse 10 n'a pas vocation à porter le groupe motopropulseur 5. En effet, la poutre 10 est seulement utilisée en tant que masse battante en constituant un élément rigide formant la masse battante avec les dispositifs ou éléments 8 supportés par la traverse. En outre, la traverse permet de recevoir ces éléments 8 et assure une fonction de réception, de support de ces éléments 8.

Comme vu précédemment, le support arrière de type biellette assure également une double filtration. En effet, la biellette 50 comprend le premier élément de filtration 51, par exemple agencé derrière, et le deuxième élément de filtration 52 alors agencé devant si la biellette s'étend longitudinalement. De préférence, la masse de la biellette est étudiée, calculée, pour optimiser la filtration des vibrations. Avantageusement, c'est le corps de la biellette qui fait office de masse battante. La biellette est par exemple en acier, ou en alliage d'aluminium, ou en fonte.

Comme évoqué précédemment, par exemple, la poutre 10 est en acier, notamment en tôle d'acier. La poutre 10 peut être obtenue par extrusion et/ou par pliage et/ou par emboutissage. Les éléments fixés sur la traverse permettent de refermer l'ensemble et donc de rigidifier l'ensemble. Eventuellement, comme illustré sur les figures 3 et 5, la poutre présente des emboutis 11, notamment afin de la rigidifier, notamment au niveau de trous permettant les passages des vis 30 traversant la poutre. La section de la poutre est par exemple fermée par un carter rigide, par exemple en aluminium, de l'élément 8 fixé afin de fermer le corps creux et ainsi rigidifier l'ensemble.

Alternativement, par exemple la poutre 10 pourrait être en alliage d'aluminium. Elle est par exemple obtenue par extrusion et/ou par pliage, ou de préférence par fonderie, par exemple par moulage sous pression. Cette masse battante (poutre et équipement additionnel tel que chargeur, pompe ou autres dispositifs) est définie, calculée, modélisée, de façon à obtenir la fréquence de coupure nécessaire (on augmente la masse pour descendre celle-ci ou inversement).

Par exemple, l'élément 8 ou les éléments 8 ont une masse suffisante pour le calage du mode (masse battante). Pour cela, il est préférable d'utiliser des accessoires du véhicule tels que chargeur, onduleurs, boitiers électriques afin d'éviter l'utilisation de masses additionnelles spécifiques. En effet, il est souhaitable de ne pas pénaliser la masse totale du véhicule. Avantageusement, l'élément 8 est un chargeur électrique. Par exemple, le chargeur électrique 8 permet et/ou participe au rechargement de la batterie 9 d'alimentation de l'au moins un moteur électrique. Dans ce mode de réalisation, le chargeur 8 est fixé à la poutre 10, par exemple sur la poutre 10. De préférence, dans ce cas, la poutre s'étend sensiblement dans un plan transversal et longitudinal, notamment de sorte à faciliter la fixation du chargeur sur une surface ayant une aire conséquente au-dessus de la poutre. De préférence, la poutre 10 est positionnée, selon la direction verticale, au-dessus du groupe motopropulseur 5. Par exemple, la poutre s'étend au-dessus de l'intégralité du groupe motopropulseur 5, tout du moins au-dessus de l'au moins un moteur électrique 3.

En résumé, la caisse ou châssis 2 est doublement filtrée par rapport au groupe motopropulseur 5. Autrement dit, deux niveaux ou étages de filtration des vibrations sont présents. Cette double filtration est compatible aussi bien pour un groupe motopropulseur suspendu ou pendulé comme illustré, que pour un groupe motopropulseur posé.

La solution vise donc à utiliser la masse de la poutre 10 et de préférence la masse de l'élément 8 posé, de préférence fixé, sur la poutre 10 de sorte à alourdir la masse initiale de la poutre seule. Ainsi, la poutre assure une fonction de support de la totalité ou d'une partie de l'électrotechnique. Comme vu précédemment, on profite de la présence de la poutre 10 pour y installer le chargeur électrique 8. Le chargeur électrique a une masse comprise par exemple entre 12 kg et 20 kg. La poutre, éventuellement alourdie par le chargeur et/ou un autre élément, fait ainsi office de « batteur » et assure une filtration optimale des excitations ou vibrations en provenance du groupe moto propulseur, notamment du moteur électrique 3. Autrement dit, la masse de la traverse 10 crée un système de masse battante permettant d'abaisser les modes comme illustré sur la figure 6.

En effet, la figure 6 illustre l'écart de filtration entre une simple filtration et une double filtration. On obtient une filtration F avec une pente PDF qui est deux fois plus élevée (24dB/oct) pour une fixation à double filtration DF qu'avec une fixation à simple filtration SF (12dB/oct - pente PSF) pour des fréquences supérieures à celle du mode créé par le dispositif de double filtration (raideurs et masses battantes). La solution isole ainsi plus efficacement les moyennes et hautes fréquences du groupe motopropulseur comprenant au moins un moteur électrique. Grâce à l'ajustement de la masse battante, au niveau de la poutre et/ou au niveau de la biellette 50 de reprise de couple, on s'approche de la fréquence de coupure souhaitée FC, par exemple de l'ordre de 400 Hz.

La solution peut convenir aussi bien pour un groupe motopropulseur pendulé que posé.

La solution est simple, économique et permet de traiter, atténuer, filtrer les moyennes et hautes fréquences de sorte à améliorer notamment l'acoustique. Le confort pour les passagers du véhicule est accru et la nuisance sonore pour les personnes à proximité du véhicule est abaissée.

En outre la solution permet de fixer un groupe motopropulseur comprenant au moins un moteur électrique au sein d'une caisse destinée à recevoir un groupe motopropulseur équipé d'un moteur thermique. Autrement dit, malgré l'écart conséquent entre les longerons d'une caisse destinée à recevoir un moteur thermique, la caisse peut recevoir un groupe motopropulseur électrique sans modification. En effet la traverse 10 permet de combler la différence de cote selon la direction transversale entre un groupe motopropulseur électrique et un groupe motopropulseur thermique. En effet, un groupe motopropulseur thermique est davantage volumineux au moins selon la direction transversale. La solution est compatible avec le couple élevé du moteur électrique et/ou les excitations électromagnétiques émises par un tel moteur.

La solution permet de maintenir le groupe motopropulseur fermement, rigidement, tout en offrant un gain de filtration F de l'ordre de 12 dB de filtrations supplémentaires dans la plage de fréquences comprise entre 600 Hz et 1000 Hz par rapport à la simple filtration SF, comme illustré sur le graphique de la figure 6.

Ainsi, bien que le groupe motopropulseur comprenne au moins un moteur électrique diffusant des vibrations et/ou des bruits à des fréquences gênantes, le double étage de filtration les atténue, voire les élimine. Il en résulte une baisse de ces émissions. Un véhicule électrique ainsi équipé est davantage silencieux et offre un meilleur confort acoustique pour les occupants.

Bien que les longerons 4R, 4L aient été illustrés en tant que longerons agencés à l'avant du véhicule, les longerons peuvent être agencés à l'arrière et recevoir un groupe motopropulseur agencé à l'arrière du véhicule.

Outre une isolation du groupe motopropulseur, en particulier comprenant un moteur électrique, on optimise le nombre de moyens de fixation 30. Pour rappel, les vis 30 permettent de fixer la poutre mais également de fixer les deuxièmes éléments de filtration 28 par rapport aux corps 16 recevant les premiers éléments de filtration. Ainsi, les quatre vis 30 ont plusieurs fonctions. Un nombre aussi faible de vis pour fixer un groupe motopropulseur par rapport à une caisse réduit le temps de montage ce qui engendre des économies en sus de l'économie d'approvisionnement en vis. De préférence, au niveau du support bas de type biellette, seules deux boulons coopérant avec des chapes suffisent.

Eventuellement, davantage de vis, ou au contraire une seule vis au niveau d'une extrémité de la poutre et une seule vis au niveau de l'autre extrémité de la poutre suffisent.

Eventuellement, l'agencement peut être dépourvu de biellette alourdie, aussi bien avec un berceau de la caisse 2 non filtré que filtré.

En remarque, la solution atteint donc l'objectif recherché d'améliorer le confort acoustique d'un véhicule électrique tout en permettant la fixation d'un groupe motopropulseur électrique sur une caisse destinée à recevoir un moteur thermique, et présente l'avantage de pouvoir être utilisée sur d'autres types de véhicules motorisés entre une caisse ou châssis et le groupe motopropulseur, à savoir des camions, bus, véhicules utilitaires ou encore deux roues motorisés.

Eventuellement la solution peut être adaptée sur des machines industrielles générant des vibrations, et/ou sur de l'électroménager.

## Revendications

1. Agencement (6) pour véhicule, notamment pour véhicule automobile (1), comprenant une caisse (2) et un groupe motopropulseur (5), l'agencement (6) comprenant :
- un longeron gauche (4L) et un longeron droit (4R), notamment un longeron avant gauche et un longeron avant droit,
- un support latéral gauche (20) fixé au groupe motopropulseur (5) et au longeron gauche (4L), le support latéral gauche (20) comprenant un premier élément de filtration (18) des vibrations et un deuxième élément de filtration (28) des vibrations, et un support latéral droit (40) fixé au groupe motopropulseur (5) et au longeron droit (4R), le support latéral droit (40) comprenant un premier élément de filtration (18) des vibrations et un deuxième élément de filtration (28) des vibrations,
- une poutre (10) s'étendant transversalement ou sensiblement transversalement, la poutre (10) étant fixée au support latéral gauche (20) et au support latéral droit (40),
- un support arrière (50) fixé au groupe motopropulseur (5) et à la caisse (2), le support arrière (50) comprenant un premier élément de filtration (51) des vibrations et un deuxième élément de filtration (52) des vibrations,
- au moins un élément (8) d'un tel véhicule étant agencé sur la poutre (10) pour faire office de masse battante.

2. Agencement (6) selon la revendication précédente, **caractérisé en ce que** l'agencement (6) comprend deux moyens de fixation gauche (30) et deux moyens de fixation droit (30), notamment des vis,
la poutre (10) étant fixée sur le support latéral gauche (20) par les deux moyens de fixation gauche (30) et sur le support latéral droit (40) par les deux moyens de fixation droit (30),
les moyens de fixation s'étendant éventuellement selon la direction verticale, notamment du haut vers le bas.

3. Agencement (6) selon la revendication précédente, **caractérisé en ce que** les premier et deuxième éléments de filtration (18, 28) du support latéral gauche (20) sont maintenus l'un par rapport à l'autre par les deux moyens de fixation gauche (30),
et **en ce que** les premier et deuxième éléments de filtration (18, 28) du support latéral droit (40) sont maintenus l'un par rapport à l'autre par les deux moyens de fixation droit (30).

4. Agencement (6) selon la revendication précédente, **caractérisé en ce que** les deux moyens de fixation gauche (30) sont agencés au niveau d'une première extrémité (12) de la poutre (10),
et **en ce que** les deux moyens de fixation droit (30) sont agencés au niveau d'une deuxième extrémité (13) de la poutre (10).

5. Agencement (6) selon l'une des revendications précédentes, **caractérisé en ce que** le support arrière (50) est une biellette comprenant un premier axe (51A) et un deuxième axe (52A), notamment un premier axe (51A) et un deuxième axe (52A) parallèles l'un par rapport à l'autre, la biellette comprenant un premier plot de filtration (51) des vibrations au niveau de son premier axe (51A) et un deuxième plot de filtration (52) des vibrations au niveau de son deuxième axe (52A), notamment le support arrière (50) est agencé en bas du groupe moto propulseur (5) et/ou s'étend sensiblement selon la direction longitudinale.

6. Agencement (6) selon la revendication précédente, **caractérisé en ce que** le premier axe (51A) et/ou le deuxième axe (52A) de la biellette (50) s'étend transversalement.

7. Agencement (6) selon l'une des revendications précédentes, **caractérisé en ce que** l'au moins un élément (8) est un chargeur électrique et/ou une pompe de climatisation et/ou un compresseur de climatisation et/ou une batterie.

8. Agencement (6) selon l'une des revendications précédentes, **caractérisé en ce que** la poutre (10) est en alliage d'aluminium, notamment obtenue par extrusion et/ou par pliage et/ou par fonderie, ou **en ce que** la poutre (10) est en acier, notamment obtenue par découpe et emboutissage,
ou **en ce que** la poutre (10) est en matériau plastique et/ou en matériau composite, éventuellement en comprenant un lest.

9. Agencement (6) selon l'une des revendications précédentes, **caractérisé en ce que** la masse de la poutre (10) est supérieure ou égale à 1 kg.

10. Agencement (6) selon l'une des revendications précédentes, **caractérisé en ce que** l'au moins un élément (8) a une masse totale supérieure ou égale à 5 kg.

11. Agencement (6) selon l'une des revendications précédentes, **caractérisé en ce que** la poutre (10) est positionnée, selon la direction verticale, au-dessus du groupe motopropulseur (5).

12. Véhicule, notamment véhicule automobile (1), **caractérisé en ce qu'**il comprend un agencement (6) selon l'une des revendications précédentes.
